(19) **Europäisches Patentamt / European Patent Office / Office européen des brevets**

(11) **EP 4 471 900 A1**

(12) **EUROPEAN PATENT APPLICATION**
published in accordance with Art. 153(4) EPC

(43) Date of publication:
04.12.2024 Bulletin 2024/49

(21) Application number: 23746754.3

(22) Date of filing: 17.01.2023

(51) International Patent Classification (IPC):
$H01M\ 4/38^{(2006.01)}$    $H01M\ 4/36^{(2006.01)}$
$H01M\ 4/58^{(2010.01)}$

(52) Cooperative Patent Classification (CPC):
H01M 4/36; H01M 4/38; H01M 4/58; Y02E 60/10

(86) International application number:
PCT/JP2023/001198

(87) International publication number:
WO 2023/145540 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022 JP 2022011692

(71) Applicant: Panasonic Intellectual Property
Management Co., Ltd.
Kadoma-shi, Osaka 571-0057 (JP)

(72) Inventors:
• JIN, Takuya
Kadoma-shi, Osaka 571-0057 (JP)
• SAITO, Yusuke
Kadoma-shi, Osaka 571-0057 (JP)
• SATO, Yosuke
Kadoma-shi, Osaka 571-0057 (JP)
• ASANO, Taisuke
Kadoma-shi, Osaka 571-0057 (JP)

(74) Representative: Eisenführ Speiser
Patentanwälte Rechtsanwälte PartGmbB
Gollierstraße 4
80339 München (DE)

(54) **NEGATIVE ELECTRODE ACTIVE MATERIAL FOR NONAQUEOUS ELECTROLYTE SECONDARY BATTERIES, NEGATIVE ELECTRODE, AND NONAQUEOUS ELECTROLYTE SECONDARY BATTERY**

(57) A negative electrode active material for nonaqueous electrolyte secondary batteries according to the present invention is characterized by containing composite particles that contain SiC and at least one of Si and an Si alloy, and is also characterized in that the composite particles have a crystallite diameter of 2.0 nm to 5.0 nm as calculated from the half width of the diffraction peak of the (111) plane of SiC in an XRD pattern obtained by an X-ray diffraction method.

Figure 2

EP 4 471 900 A1

**Description**

TECHNICAL FIELD

The present disclosure relates to a negative electrode active material for non-aqueous electrolyte secondary batteries, a negative electrode, and a non-aqueous electrolyte secondary battery.

BACKGROUND

It is known that a silicon material such as silicon (Si) and silicon oxide represented by $SiO_x$ can occlude more lithium ions per unit volume as compared with a carbon material such as graphite, and thus, the application thereof to a negative electrode of a non-aqueous electrolyte secondary battery has been considered. However, since the silicon material undergoes large-scale expansion and contraction during charging and discharging of a battery, there is a disadvantage that cycle characteristics deteriorate due to the pulverization of Si, the peeling from a current collector, or the like.

For example, Patent Literature 1 proposes a negative electrode active material containing a composite particle composed of Si and/or a Si alloy and SiC in order to improve cycle characteristics of a battery.

CITATION LIST

PATENT LITERATURE

Patent Literature 1: JP 2013-171793 A

SUMMARY

Meanwhile, in Patent Literature 1, since a composite particle is produced by firing a mixture containing a Si source and a C source at a high firing temperature, SiC in the composite particle has high crystallinity. It is not possible to sufficiently alleviate the expansion and contraction of Si or a Si alloy in association with charging and discharging of a battery, with SiC having such high crystallinity. As a result, the pulverization of the composite particle is not suppressed, and the deterioration of cycle characteristics of the battery is not sufficiently suppressed.

Therefore, the present disclosure aims to provide a negative electrode active material for non-aqueous electrolyte secondary batteries capable of suppressing the deterioration of cycle characteristics of a battery.

A negative electrode active material for non-aqueous electrolyte secondary batteries according to one aspect of the present disclosure, is characterized by containing a composite particle containing SiC and at least one of Si and a Si alloy, in which the composite particle has a crystallite diameter, calculated from the half width of a diffraction peak of a (111) plane of SiC in an XRD pattern obtained by an X-ray diffraction method, of greater than or equal to 2.0 nm and less than or equal to 5.0 nm.

A negative electrode according to one aspect of the present disclosure, contains the negative electrode active material for non-aqueous electrolyte secondary batteries.

A non-aqueous electrolyte secondary battery according to one aspect of the present disclosure, includes: the negative electrode; a positive electrode; and a non-aqueous electrolyte.

According to one aspect of the present disclosure, a negative electrode active material for non-aqueous electrolyte secondary batteries capable of suppressing the deterioration of charging-and-discharging cycle characteristics can be provided.

BRIEF DESCRIPTION OF DRAWINGS

FIG. 1 is a schematic cross-sectional view illustrating one example of a non-aqueous electrolyte secondary battery according to an embodiment.
FIG. 2 is a schematic cross-sectional view illustrating one example of a composite particle used for a negative electrode active material in the embodiment.
FIG. 3 is a schematic cross-sectional view illustrating one example of a negative electrode active material particle used for a negative electrode active material in the embodiment.

DESCRIPTION OF EMBODIMENTS

Hereinafter, a non-aqueous electrolyte secondary battery using a negative electrode active material according to one aspect of the present disclosure will be explained.

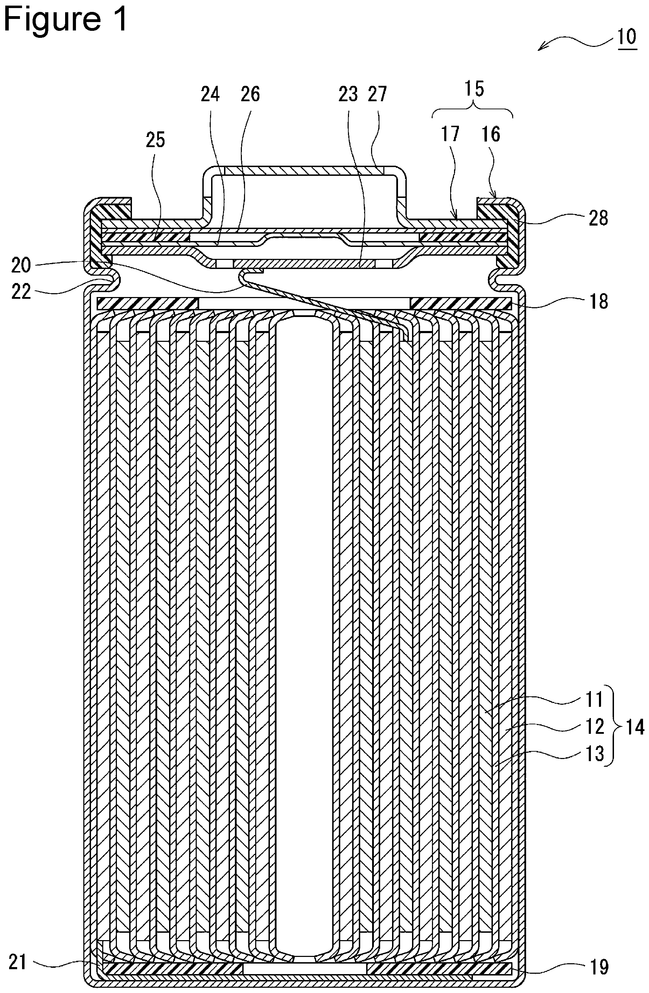

FIG. 1 is a schematic cross-sectional view illustrating one example of a non-aqueous electrolyte secondary battery according to an embodiment. A non-aqueous electrolyte secondary battery 10 shown in FIG. 1 includes a winding-type electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 housing the above-described members therein. The battery case 15 includes a bottomed cylindrical case body 16 and a sealing assembly 17 that closes an opening of the case body 16. Note that, instead of the winding-type electrode assembly 14, an electrode assembly having another form, such as a stacked electrode assembly in which positive electrodes and negative electrodes are alternately stacked with separators interposed therebetween, may be applied. Furthermore, examples of the battery case 15 include metal cases having a cylindrical shape, a square shape, a coin shape, a button shape, or the like, and resin cases formed by laminating resin sheets (so-called laminate type).

The non-aqueous electrolyte contains, for example, a non-aqueous solvent and an electrolyte salt dissolved in the non-aqueous solvent. Examples of the non-aqueous solvent include esters, ethers, nitriles, amides, and mixed solvents of two or more kinds thereof. The non-aqueous solvent may contain a halogen-substituted product obtained by substituting at least a part of hydrogen in the solvent described above with a halogen atom such as fluorine. Examples of the electrolyte salt include lithium salts such as $LiPF_6$. Note that the non-aqueous electrolyte is not limited to a liquid electrolyte, and may be a solid electrolyte in which a gel polymer or the like is used.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of a lateral surface portion projects inward to support the sealing assembly 17. The projecting portion 22 is preferably formed in an annular shape along the circumferential direction of the case body 16, and supports the sealing assembly 17 on the upper surface thereof.

The sealing assembly 17 has a structure in which a filter 23, a lower vent member 24, an insulating member 25, an upper vent member 26, and a cap 27 are stacked in this order from the electrode assembly 14 side. Each member included in the sealing assembly 17 has, for example, a disk shape or a ring shape, and the members except for the insulating member 25 are electrically connected to one another. The lower vent member 24 and the upper vent member 26 are connected to each other at the respective center regions, and the insulating member 25 is interposed between the peripheral portions thereof. When the internal pressure of the non-aqueous electrolyte secondary battery 10 increases due to heat generated by an internal short circuit or the like, for example, the lower vent member 24 deforms so as to push the upper vent member 26 up toward the cap 27 side and breaks, and thus a current pathway between the lower vent member 24 and the upper vent member 26 is cut off. When the internal pressure further increases, the upper vent member 26 breaks, and gas is discharged from an opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the inner surface of the bottom of the case body 16 by welding or the like, and the case body 16 serves as a negative electrode terminal.

Hereinafter, the positive electrode 11, the negative electrode 12, and the separator 13 will be described in detail.

[Positive Electrode]

The positive electrode 11 preferably includes a positive electrode current collector made up of a metal foil or the like, and a positive electrode mixture layer formed on the current collector. The positive electrode current collector may be, for example, a foil of a metal, such as aluminum, that is stable in a potential range of the positive electrode 11, a film having the metal disposed on the surface layer thereof, and the like. The positive electrode mixture layer preferably contains a conductive agent, a binding material, and the like in addition to the positive electrode active material.

The positive electrode 11 is obtained by performing, for example, coating, drying, and rolling of a positive electrode slurry containing a positive electrode active material, a conductive agent, a binding material, an appropriate solvent, and the like on a positive electrode current collector. As the solvent, for example, an organic solvent such as N-methyl-2-pyrrolidone (NMP) is preferable.

Examples of the positive electrode active material include lithium transition metal oxides containing transition metal elements such as Co, Mn, and Ni. Examples of the lithium transition metal oxides include $Li_xCoO_2$, $Li_xNiO_2$, $Li_xMnO_2$, $Li_xCo_yNi_{1-y}CO_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (M; at least one of Na, Mg, Sc, Y, Mn, Fe, Co, Ni, Cu, Zn, Al, Cr, Pb, Sb, or B, $0 < x \leq 1.2$, $0 < y \leq 0.9$, $2.0 \leq z \leq 2.3$). These may be used singly, or a plurality of kinds of them may be mixed and used.

The conductive agent is used, for example, for enhancing the electrical conductivity of the positive electrode mixture layer. Examples of the conductive agent include carbon materials such as carbon black, acetylene black, Ketjenblack, and graphite. These may be used singly or in combination of two or more kinds thereof.

Examples of the binding material include: fluorine-based resins such as polytetrafluoroethylene (PTFE) and polyvinylidene fluoride (PVdF); polyacrylonitrile (PAN); polyimide; styrene-butadiene rubber (SBR); polyacrylic acid (PAA) or a salt thereof (PAA-Na, PAA-K, etc., and partially-neutralized salts may be used); polyvinyl alcohol (PVA); carboxymethyl cellulose (CMC) or a salt thereof (CMC-Na, CMC-K, CMC-$NH_4$, etc., or partially-neutralized salts may be used); and polyethylene oxide (PEO).

[Negative Electrode]

The negative electrode 12 preferably includes a negative electrode current collector made up of a metal foil or the like, and a negative electrode mixture layer formed on the current collector. The negative electrode current collector may be, for example, a foil of a metal, such as copper, that is stable in a potential range of the negative electrode 12, a film having the metal disposed on the surface layer thereof, and the like. The negative electrode mixture layer preferably contains a binding material and the like in addition to the negative electrode active material.

The negative electrode 12 is obtained by performing, for example, coating of a negative electrode slurry containing a negative electrode active material, a binding material, an appropriate solvent, and the like on a negative electrode current collector, and then drying, and rolling thereof. As the solvent, for example, an aqueous solvent such as water is preferable. Examples of the binding material include those similar to those for the positive electrode 11.

The negative electrode active material contains a composite particle containing at least one of Si or a Si alloy, and SiC. Here, the "composite particle" is a particle in which solid components such as "Si and/or Si alloy" and "SiC" are integrated by physical and/or chemical bonding, and denotes a particle being in a state where respective solid components are dispersively present in a particle to such an extent that both "Si and/or Si alloy" and "SiC" are present at least on the surface of the composite particle as well as in a bulk. Therefore, for example, a particle obtained by coating the surface of a Si particle (particle which does not contain SiC in the bulk) with SiC does not contain SiC in the bulk, and thus does not correspond to the "composite particle" according to the present disclosure. However, the dispersion of the solid components may be in a state of a compatible system in which the solid components are uniformly dispersed at a molecular level, or may be in a state of a non-compatible system in which the solid components form domains in a particle.

In addition, the "composite particle composed of at least Si and/or a Si alloy and SiC" may be in any state of: (a) a particle in which Si and SiC are composited; (b) a particle in which a Si alloy and SiC are composited, (c) a mixture of a particle in which Si and SiC are composited and a particle in which a Si alloy and SiC are composited, and (d) a particle in which solids respectively having a Si phase and a Si alloy phase is further composited with SiC. A specific composition of the Si alloy is not particularly limited as long as the Si alloy is an alloy formed of Si and one kind or two or more kinds of metal elements, and specific examples of the metal elements include Fe, Co, Sb, Bi, Pb, Ni, Ag, Sn, Al, Zr, Cr, P, S, V, Mn, Nb, Mo, Cu, Zn, Ge, In, and Ti.

As long as the composite particle contains at least Si, etc. and SiC, the composite particle may contain other solid components such as a non-metal element simple substance, a metal, an oxide, a carbide, a nitride, a silicide, a sulfide or a phosphide, and C (solid carbon), and may be a composite thereof.

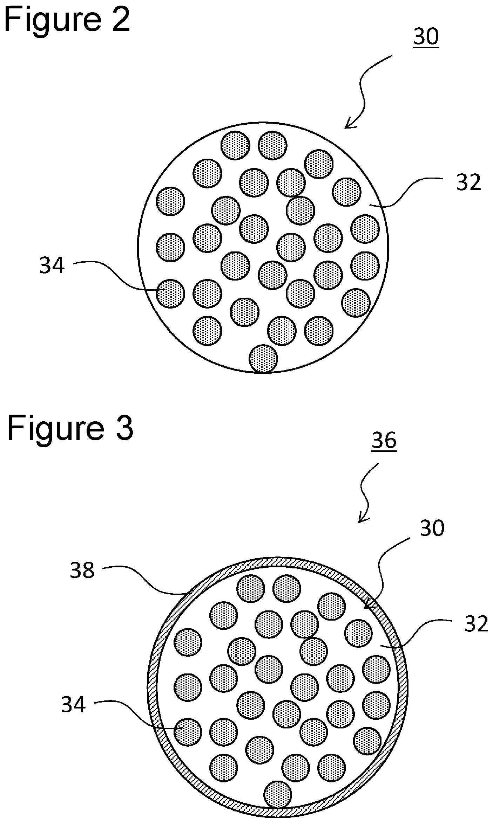

As described above, the composite particle only needs to be in a state where respective solid components are dispersively present in a particle to such an extent that both Si, etc. and SiC are present at least on the surface of the composite particle as well as in a bulk, and the detailed state of the solid components in the composite particle is not particularly limited. However, from a viewpoint of suppressing the pulverization of the composite particle in association with charging and discharging of a battery, and eventually, suppressing the deterioration of cycle characteristics of the battery, it is preferable that Si, etc. and SiC form domains having a sea-island structure in the composite particle. Note that the "sea-island structure" denotes a state where other components are discontinuously mixed in a main component (component that is present relatively continuously) in the morphology of the non-compatible system in which a plurality of solid components are mixed. An example thereof is a state where domains 34 of Si, etc. that are discontinuously present are formed in a SiC phase 32, as in a composite particle 30 illustrated in FIG. 2. Note that, although the explanation with the drawings is omitted, it may be a state where domains of SiC that are discontinuously present are formed in a phase of Si, etc. However, from a viewpoint of suppressing the expansion and contraction of Si due to charging and discharging and further suppressing the pulverization of the composite particle, a composite particle in which domains of Si, etc. that are discontinuously present are formed in a SiC phase, is more preferable than a composite particle in which domains of SiC that are discontinuously present are formed in a phase of Si or the like.

In an XRD pattern of the composite particle obtained by an X-ray diffraction method, a crystallite diameter calculated from a half width of a diffraction peak of a (111) plane of SiC is greater than or equal to 2.0 nm and less than or equal to 5.0 nm, and preferably greater than or equal to 2.0 nm and less than or equal to 4.0 nm. Furthermore, since SiC having a crystallite diameter within the above-described range is widely distributed over the surface of the composite particle and in the bulk, the expansion and contraction of Si, etc. in association with charging and discharging of a battery is alleviated, the pulverization of the composite particle is suppressed, and eventually, the deterioration of cycle characteristics of the battery is suppressed. Note that, in a case of the conventional composite particle, a firing temperature during the production of the composite particle is high, and thus the crystallinity of SiC increases (that is, the crystallite diameter is larger than the crystallite diameter in the present embodiment). SiC having such high crystallinity does not sufficiently act as a cushioning material for alleviating the expansion and contraction of Si, etc., so that the pulverization of the composite particle occurs, and it is not possible to sufficiently obtain the effect of suppressing the deterioration of cycle characteristics of a battery. Note that, when the crystallite diameter of SiC is less than or equal to 2.0 nm, the crystallinity of SiC is too low, so that a side reaction or the like with a non-aqueous electrolyte occurs, and also in this case, it is not possible to sufficiently obtain the effect of suppressing the deterioration of cycle characteristics of a battery.

The half width of the diffraction peak of the (111) plane of SiC is measured under the following conditions.

Measuring instrument: X-ray diffraction measuring instrument (model: RINT-TTRII) manufactured by Rigaku Corporation

Anticathode: Cu
Tube voltage: 50 kv
Tube current: 300 mA
Optical system: parallel beam method
[Incident side: multilayer film mirror (divergence angle: 0.05°, beam width: 1 mm), seller slit (5°), light receiving side: long slit PSA200 (resolution: 0.057°), seller slit (5°)]
Scanning step: 0.01° or 0.02°
Counting time: 1 to 6 seconds

The Scherrer equation is expressed by the following equation.

$$s = K\lambda/B\cos\theta$$

In the above-described equation, s denotes a crystallite diameter, $\lambda$ denotes a wavelength of an X-ray, B denotes a half width of a diffraction peak of a (111) plane of SiC, $\theta$ denotes a diffraction angle (rad), and K denotes a Scherrer constant. In the present embodiment, K is 0.89.

In the composite particle, it is preferable that a diffraction peak of a (10-11) plane of $SiO_2$ is not observed in an XRD pattern obtained by an X-ray diffraction method. Accordingly, a side reaction with the non-aqueous electrolyte is suppressed in the composite particle, and the deterioration of cycle characteristics is further suppressed. Note that, in the XRD pattern obtained by the X-ray diffraction method, the diffraction peak of the (10-11) plane of $SiO_2$ is observed around 25° in a case where the diffraction peak is observed.

In a case of a composite particle in which domains of Si, etc. that are discontinuously present in a SiC phase are formed, an average diameter of the domains of Si, etc. preferably falls within a range of greater than or equal to 0.01 $\mu$m and less than or equal to 1 $\mu$m, and more preferably a range of greater than or equal to 0.05 $\mu$m and less than or equal to 0.5 $\mu$m, for example, from a viewpoint of suppressing the volume change during charging and discharging and suppressing the cracking of the composite particle. Furthermore, in a case of a composite particle in which domains of SiC that are discontinuously present in a phase of Si, etc. are formed, an average diameter of the domains of SiC preferably falls within a range of greater than or equal to 0.01 $\mu$m and less than or equal to 1 $\mu$m, and more preferably a range of greater than or equal to 0.05 $\mu$m and less than or equal to 0.5 $\mu$m, for example, from a viewpoint of suppressing the volume change during charging and discharging and suppressing the cracking of the composite particle. The average diameter of the domains is measured by observing a cross section of the composite particle with a scanning electron microscope (SEM) or a transmission electron microscope (TEM). Specifically, the average diameter is obtained by averaging the longest diameters of 20 domains in the composite particle.

An average particle diameter of the composite particles may be, for example, greater than or equal to 1 $\mu$m and less than or equal to 20 $\mu$m or greater than or equal to 5 $\mu$m and less than or equal to 15 $\mu$m. Here, the average particle diameter of the composite particles is a grain diameter of primary particles, and denotes a grain diameter (volume average grain diameter) at which a volume integrated value is 50% in a grain size distribution measured by a laser diffraction scattering method (by using, for example, "LA -750" manufactured by HORIBA, Ltd.).

The mass ratio of Si and a Si alloy in the composite particle is preferably greater than or equal to 30 mass% and less than or equal to 70 mass% from a viewpoint of further suppressing the deterioration of the cycle characteristics of a battery. Furthermore, the weight ratio of SiC in the composite particle is preferably greater than or equal to 5 mass% and less than or equal to 70 mass% from a viewpoint of further suppressing the deterioration of the cycle characteristics of a battery. As for the composition ratio of the solid components in the composite particle, it is possible to obtain the amount of carbon derived from SiC by measuring the total amount of carbon and the amount of free carbon through, for example, a combustion-infrared absorption method (JISR1616) and subtracting the amount of free carbon from the total amount of carbon. It is also possible to measure the amount of Si through an inductively coupled plasma emission spectrometry. From these results, the mass ratio of Si, etc. and SiC can be calculated.

FIG. 3 is a schematic cross-sectional view illustrating one example of a negative electrode active material particle used for a negative electrode active material in the present embodiment. A negative electrode active material particle 36 illustrated in FIG. 3 has the composite particle 30 and a conductive layer 38 formed on the surface of the composite particle 30. Since the composite particle 30 is described above, the explanation thereof will be omitted. The conductive layer 38 may be formed on a part of the surface of the composite particle 30, or may be formed on the entire surface of the composite particle 30.

The material constituting the conductive layer is preferably an electrochemically-stable material, and is preferably at least one kind selected from the group consisting of a carbon material, a metal material, and a metal compound. Examples of the carbon material include carbon black, acetylene black, Ketjenblack, and graphite. Examples of the metal material include copper, nickel, and alloys thereof that are stable in a potential range of the negative electrode. Examples of the metal compound include a copper compound and a nickel compound. Among them, it is particularly preferable to use the carbon material.

The thickness of the conductive layer is preferably greater than or equal to 1 nm and less than or equal to 200 nm, and more preferably greater than or equal to 5 nm and less than or equal to 100 nm in consideration of the diffusibility of lithium ions in the composite particle. The thickness of the conductive layer can be measured by observing a cross section of the particle using a SEM, a TEM, or the like.

As the negative electrode active material, the composite particle or the negative electrode active material particle described above may be used alone, or may be used with other active materials known in the related art in combination. As the other active materials, a carbon material such as graphite is preferable from a viewpoint that the volume change thereof associated with charging and discharging is smaller than that of Si, etc. Examples of the carbon material include natural graphite such as flaky graphite, massive graphite, and earthy graphite, and artificial graphite such as massive artificial graphite (MAG) and graphitized mesophase-carbon microbeads (MCMB). The ratio between the composite particle or the negative electrode active material particle described above and the carbon material preferably falls within, for example, a range between 1:99 and 30:70 in a mass ratio from a viewpoint of cycle characteristics.

One example of a composite particle manufacturing method will be explained. First, a raw material serving as a Si source and a raw material serving as a C source are mixed at a predetermined mass ratio, and pulverized in an inert atmosphere while applying a shear force to this mixture to form a composite. Examples of the device for applying a shear force include a pulverizer such as a planetary ball mill. Examples of the raw material serving as the Si source include metal Si, polycrystal Si, amorphous Si, and an Si-M alloy (M is the metal element described above). Examples of the raw material serving as a C source include carbon fiber, carbon black, acetylene black, Ketjenblack, graphite, amorphous carbon, and activated carbon.

Then, the composite particle which has formed a composite, is heat-treated at a predetermined heat treatment temperature and a predetermined heat treatment time in an inert atmosphere. At this time, heat treatment may be performed while applying pressure to the composite particle by hot pressing or the like to produce a sintered body. Note that, thereafter, the above-described sintered body may be pulverized until it becomes granular.

By adjusting the heat treatment temperature for the composite particle, it is possible to adjust the crystallite diameter calculated from the half width of the peak of the SiC (111) plane. The heat treatment temperature is preferably, for example, greater than or equal to 600°C and less than or equal to 950°C from a viewpoint of setting the crystallite diameter calculated from the half width of the diffraction peak of the (111) plane of SiC to a range of greater than or equal to 2.0 nm and less than or equal to 5.0 nm. If the heat treatment temperature exceeds 950°C, the crystallinity of SiC becomes too high, whereas, if the heat treatment temperature is less than 600°C, the crystallinity of SiC becomes too low. The heat treatment time is, for example, preferably greater than or equal to 1 hour, and more preferably greater than or equal to 3 hours.

Examples of a method for forming a conductive layer on the surface of a composite particle include, in a case where the conductive layer is composed of a carbon material, a CVD method using acetylene, methane, or the like, and a method of mixing coal pitch, petroleum pitch, a phenol resin, or the like with a composite particle and performing a heat treatment thereon. In addition, a carbon material or the like may be fixed to the surface of the composite particle using a binding material. In a case where a method of performing a heat treatment is employed to form a conductive layer, it is desirable to use a composite particle to which the above-described heat treatment for adjusting the crystallite diameter of SiC has not been performed yet, and to adjust the crystallite diameter of SiC through a heat treatment to be performed at the time of forming a conductive layer. Alternatively, in a case where the conductive layer is composed of a metal or a metal compound, examples thereof include a method of forming a conductive layer on the surface of a composite particle through electroless plating.

[Separator]

As the separator 13, for example, a porous sheet having an ion permeation property and an insulation property is used. Specific examples of the porous sheet include fine porous thin films, woven fabrics, and nonwoven fabrics. As a material of the separator 13, olefin-based resins such as polyethylene and polypropylene, cellulose, and the like are preferable. The separator 13 may be a stacked body including a cellulose fiber layer and a thermoplastic resin fiber layer such as an olefin-based resin.

EXAMPLES

Hereinafter, the present disclosure will be further explained with reference to Examples. However, the present disclosure is not limited to these Examples.

<Example 1>

[Production of Negative Electrode Active Material]

Si powder and Ketjenblack powder were mixed at a mass ratio of 87:13. This mixture was put into a pot (made of SUS, volume: 500 mL) of a planetary ball mill (P-5 manufactured by Fritsch GmbH) to fill therein, 24 SUS balls (diameter: 20 mm) were put in the pot, the lid was closed, and the mixture was pulverized at 200rpm for 50 hours in an inert atmosphere. As a result, a composite particle containing Si and SiC was obtained. The mass ratio of Si in the composite particle was 56 mass%, and the mass ratio of SiC in the composite particle was 44 mass%. The measurement of the mass ratio is as described above.

The obtained composite particle and coal pitch (MCP250 manufactured by JFE Chemical Corporation) were mixed, and the mixture was heated at 800°C for 5 hours in an inert atmosphere to form a conductive layer in which the surface of the composite particle was coated with a carbon material. The coating amount of the conductive layer was set to 10 mass% with respect to the total mass of the composite particle and the conductive layer. The composite particle having the conductive layer formed thereon, was used as a negative electrode active material of Example 1.

The negative electrode active material of Example 1 was measured by an X-ray diffraction method, and the half width (hereinafter, referred to as a half width of SiC) of the diffraction peak of the (111) plane of SiC and the crystallite diameter (hereinafter, referred to as a crystallite diameter of SiC) calculated from the half width were calculated from the obtained XRD pattern. As a result, the half width of SiC was 3.0°, and the crystallite diameter of SiC was 2.7 nm.

[Production of Negative Electrode]

The above-described obtained negative electrode active material particle, graphite, CMC, and SBR were mixed at a mass ratio of 5:92.5:1:1.5 and an appropriate amount of water was added thereto, thereby producing a negative electrode slurry. The negative electrode slurry was applied onto both surfaces of a copper foil, dried, and then rolled by a rolling roller to produce a negative electrode.

[Preparation of Non-aqueous Electrolyte]

Lithium hexafluorophosphate ($LiPF_6$) was added at 1.0 mol/liter to a mixed solvent obtained by mixing ethylene carbonate (EC), ethyl methyl carbonate (EMC), and diethyl carbonate (DEC) at a volume ratio of 3:6:1 to prepare a non-aqueous electrolyte.

[Production of Positive Electrode]

Lithium cobaltate, acetylene black (HS100 manufactured by Denki Kagaku Kogyo Co., Ltd.), and polyvinylidene fluoride (PVDF) were mixed at a mass ratio of 95:2.5:2.5. An appropriate amount of N-methyl-2-pyrrolidone (NMP) was added to the mixture to prepare a positive electrode slurry. Next, the positive electrode slurry was applied onto both surfaces of an aluminum foil, dried, and then rolled by a rolling roller to produce a positive electrode.

[Production of Non-Aqueous Electrolyte Secondary Battery]

Each of the positive electrode and the negative electrode described above was cut into a predetermined size, an electrode tab was attached thereto, and winding thereof was performed with a separator interposed therebetween to produce a winding-type electrode assembly. Next, the electrode assembly was housed in an aluminum laminate film, and the above-described non-aqueous electrolyte was injected and sealed. This was used as a non-aqueous electrolyte secondary battery of Example 1.

<Example 2>

A negative electrode active material was produced in the same manner as in Example 1 except that the additive amount of coal pitch was increased such that the coating amount of the conductive layer was 20 mass% with respect to the total mass of the composite particle and the conductive layer. Then, this negative electrode active material was used to produce a non-aqueous electrolyte secondary battery in the same manner as in Example 1.

<Example 3>

A negative electrode active material was produced in the same manner as in Example 1 except that a Si powder and a Ketjenblack powder were mixed at a mass ratio of 88:12. The mass ratio of Si in the composite particle of Example 3 was 60 mass%, and the mass ratio of SiC in the composite particle of Example 3 was 40 mass%. In addition, the half width of SiC in the negative electrode active material of Example 3 was 3.1°, and the crystallite diameter of SiC was 2.7 nm. This negative electrode active material was used to produce a non-aqueous electrolyte secondary battery in the same manner as in Example 1.

<Example 4>

A negative electrode active material was produced in the same manner as in Example 1 except for setting the heat treatment temperature for the mixture obtained by mixing the composite particle and the coal pitch to 950°C. The half width of SiC in the negative electrode active material of Example 4 was 1.7°, and the crystallite diameter of SiC was 4.9 nm. This negative electrode active material was used to produce a non-aqueous electrolyte secondary battery in the same manner as in Example 1.

<Example 5>

A negative electrode active material was produced in the same manner as Example 1 except for setting the heat treatment temperature for the mixture obtained by mixing the composite particle and the coal pitch to 650°C. The half width of SiC in the negative electrode active material of Example 5 was 3.9°, and the crystallite diameter of SiC was 2.1 nm. This negative electrode active material was used to produce a non-aqueous electrolyte secondary battery in the same manner as in Example 1.

<Comparative Example 1>

Si powder and Ketjenblack powder were mixed at a mass ratio of 87:13. This mixture was heat-treated at 1500°C for 2 hours in an inert atmosphere. This mixture was pulverized to obtain a composite particle containing Si and SiC. The mass ratio of Si in the composite particle was 56 mass%, and the mass ratio of SiC in the composite particle was 44 mass%.
A conductive layer was formed on the obtained composite particle in the same manner as in Example 1. The composite particle having the conductive layer formed thereon, was used as a negative electrode active material of Comparative Example 1. The half width of SiC in the negative electrode active material of Comparative Example 1 was 0.5°, and the crystallite diameter of SiC was 16.8 nm. This negative electrode active material was used to produce a non-aqueous electrolyte secondary battery in the same manner as in Example 1.

<Comparative Example 2>

A negative electrode active material was produced in the same manner as in Example 1 except for setting the heat treatment temperature for the mixture obtained by mixing the composite particle and the coal pitch to 500°C. The half width of SiC in the negative electrode active material of Comparative Example 2 was 5.0°, and the crystallite diameter of SiC was 1.7 nm. This negative electrode active material was used to produce a non-aqueous electrolyte secondary battery in the same manner as in Example 1.

(Cycle Characteristics)

In the above-described non-aqueous electrolyte secondary battery, a charging-and-discharging cycle under the following charging-and-discharging conditions was repeated 100 times at a temperature of 25°C. First, constant-current charging was performed at a constant current of 1.0 C until the battery voltage reached 4.2 V, and then constant-voltage charging was performed at a constant voltage of 4.2 V until the current value reached 0.05 C. After a pause of 10 minutes, constant-current discharging was performed at a constant current of 1.0 C until the battery voltage reached 2.75 V. Under such charging and discharging conditions, the charging capacity and the discharging capacity at the first cycle as well as the discharging capacity at the 100th cycle were measured, and the initial efficiency and the capacity degradation rate after the 100 cycles were determined by using the following equation. The results are shown in Table 1.

Initial efficiency = (discharging capacity at the first cycle/charging capacity at the first cycle) $\times$ 100

Capacity degradation rate = ((discharging capacity at the first cycle - discharging capacity at the 100th cycle)/discharging capacity at the first cycle) $\times$ 100

[Table 1]

|  | Si mass ratio (mass%) | SiC mass ratio (mass%) | Conductive layer coating amount (mass%) | Heat treatment temperature (°C) | SiC half width (°) | Si crystallite diameter (nm) | Initial efficiency (%) | Capacity degradation rate (%) |
|---|---|---|---|---|---|---|---|---|
| Example 1 | 56 | 44 | 10 | 800 | 3.0 | 2.7 | 87 | 7 |
| Example 2 | 56 | 44 | 20 | 800 | 3.0 | 2.7 | 87 | 6 |
| Example 3 | 60 | 40 | 10 | 800 | 3.1 | 2.7 | 88 | 7 |
| Example 4 | 56 | 44 | 10 | 950 | 1.7 | 4.9 | 89 | 11 |
| Example 5 | 56 | 44 | 10 | 650 | 3.9 | 2.1 | 85 | 9 |
| Comparative Example 1 | 56 | 44 | 10 | 1500→800 | 0.5 | 16.8 | 78 | 22 |
| Comparative Example 2 | 56 | 44 | 10 | 500 | 5.0 | 1.7 | 80 | 18 |

The results show that the non-aqueous electrolyte secondary batteries of Examples 1-5 had a lower capacity degradation rate and a higher initial efficiency as compared with the non-aqueous electrolyte secondary batteries of Comparative Examples 1 and 2. Accordingly, by using a negative electrode active material containing a composite particle containing Si and SiC, in which the composite particle has a crystallite diameter, calculated from the half width of a diffraction peak of a (111) plane of SiC in an XRD pattern obtained by an X-ray diffraction method, of greater than or equal to 2.0 nm and less than or equal to 5.0 nm, it is possible to suppress the deterioration of the cycle characteristics and additionally improve the initial efficiency.

REFERENCE SIGNS LIST

10      secondary battery
11      positive electrode
12      negative electrode
13      separator

| 14 | electrode assembly |
| 15 | battery case |
| 16 | case body |
| 17 | sealing assembly |
| 18, 19 | insulating plate |
| 20 | positive electrode lead |
| 21 | negative electrode lead |
| 22 | projecting portion |
| 23 | filter |
| 24 | lower vent member |
| 25 | insulating member |
| 26 | upper vent member |
| 27 | cap |
| 28 | gasket |
| 30 | composite particle |
| 32 | SiC phase |
| 34 | domain |
| 36 | negative electrode active material particle |
| 38 | conductive layer |

**Claims**

1. A negative electrode active material for non-aqueous electrolyte secondary batteries comprising:

   a composite particle containing SiC and at least one of Si and a Si alloy, wherein
   the composite particle has a crystallite diameter, calculated from a half width of a diffraction peak of a (111) plane of SiC in an XRD pattern obtained by an X-ray diffraction method, of greater than or equal to 2.0 nm and less than or equal to 5.0 nm.

2. The negative electrode active material for non-aqueous electrolyte secondary batteries according to claim 1, wherein no diffraction peak of (10-11) of $SiO_2$ is observed in the composite particle, in the XRD pattern obtained by the X-ray diffraction method.

3. The negative electrode active material for non-aqueous electrolyte secondary batteries according to claim 1 or 2, wherein a mass ratio of the Si and the Si alloy in the composite particle is greater than or equal to 30 mass% and less than or equal to 70 mass%, and a mass ratio of the SiC in the composite particle is greater than or equal to 5 mass% and less than or equal to 70 mass%.

4. The negative electrode active material for non-aqueous electrolyte secondary batteries according to any one of claims 1 to 3, wherein a conductive layer is formed on a surface of the composite particle.

5. A negative electrode containing the negative electrode active material for non-aqueous electrolyte secondary batteries according to any one of claims 1 to 4.

6. A non-aqueous electrolyte secondary battery comprising: the negative electrode according to claim 5; a positive electrode; and a non-aqueous electrolyte.

# Figure 1

# Figure 2

# Figure 3

## INTERNATIONAL SEARCH REPORT

International application No.

**PCT/JP2023/001198**

### A. CLASSIFICATION OF SUBJECT MATTER

*H01M 4/38*(2006.01)i; *H01M 4/36*(2006.01)i; *H01M 4/58*(2010.01)i
FI:  H01M4/38 Z; H01M4/36 B; H01M4/58

According to International Patent Classification (IPC) or to both national classification and IPC

### B. FIELDS SEARCHED

Minimum documentation searched (classification system followed by classification symbols)

H01M4/38; H01M4/36; H01M4/58

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-222151 A (SHIN ETSU CHEM. CO., LTD.) 04 November 2011 (2011-11-04) claims, paragraphs [0091], [0092], comparative example 2, fig. 3 | 1, 4-6 |
| A | claims, paragraphs [0091], [0092], comparative example 2, fig. 3 | 2-3 |
| A | WO 2017/082147 A1 (NIPPON CARBON CO., LTD.) 18 May 2017 (2017-05-18) | 1-6 |
| A | WO 2015/097974 A1 (KK TOYOTA JIDOSHOKKI) 02 July 2015 (2015-07-02) | 1-6 |
| A | WO 2014/128814 A1 (KK TOYOTA JIDOSHOKKI) 28 August 2014 (2014-08-28) | 1-6 |

☐ Further documents are listed in the continuation of Box C.     ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **15 March 2023** | **28 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 471 900 A1

| | | INTERNATIONAL SEARCH REPORT | | |
|---|---|---|---|---|

**INTERNATIONAL SEARCH REPORT**
**Information on patent family members**

International application No.

**PCT/JP2023/001198**

| Patent document cited in search report | | | Publication date (day/month/year) | Patent family member(s) | | | Publication date (day/month/year) |
|---|---|---|---|---|---|---|---|
| JP | 2011-222151 | A | 04 November 2011 | US 2011/0244333 A1 claims, paragraphs [0198]-[0200], comparative example 2, fig. 3 | | | |
| | | | | EP 2372816 | A1 | | |
| | | | | CN 102214824 | A | | |
| | | | | KR 10-2011-0112215 | A | | |
| WO | 2017/082147 | A1 | 18 May 2017 | US 2018/0327322 | A1 | | |
| WO | 2015/097974 | A1 | 02 July 2015 | US 2017/0033355 | A1 | | |
| | | | | KR 10-2016-0079910 | A | | |
| | | | | CN 105849947 | A | | |
| | | | | DE 112014006065 | B | | |
| WO | 2014/128814 | A1 | 28 August 2014 | US 2015/0349337 | A1 | | |
| | | | | DE 112013006722 | B | | |
| | | | | CN 105122510 | A | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013171793 A